# DEMANDE DE BREVET EUROPEEN

(11) **EP 2 902 758 A1**
(43) Date de publication de la demande: **05.08.2015**
(21) Numéro de dépôt: 15152667.0
(22) Date de dépôt: 27.01.2015
(51) Int. Cl.: G01J 4/04, G01J 5/08, G01J 5/20, G01J 5/22, G01J 5/24

(54) **Détecteur de rayonnement photonique comportant un réseau d'antennes et un support résistif en spirale**

(30) Priorité: 30.01.2014 FR 1450731
(71) Demandeur: Commissariat à l'Énergie Atomique et aux Énergies Alternatives, 75015 Paris (FR)
(72) Inventeur: Rodriguez, Louis, 91400 Orsay (FR)
(74) Mandataire: Brevalex

(57) **Abrégé**

Détecteur de rayonnement photonique (100), comportant :
- un support (106) formant une spirale plane à au moins quatre bras, chaque bras étant suspendu entre une première extrémité (110) commune aux quatre bras et une deuxième extrémité (111.1 - 111.4), chaque bras comportant un matériau résistif dont sa résistivité varie en fonction de sa température et qui est relié électriquement aux première et deuxième extrémités dudit bras,
- un premier réseau d'antennes (102) sensibles à un premier paramètre physique du rayonnement photonique et en contact thermiquement avec le matériau résistif de deux des quatre bras, appelés premiers bras,
et dans lequel la deuxième extrémité de chaque bras est reliée électriquement à un circuit de lecture du détecteur et thermiquement à un premier puits thermique.

## Description

### DOMAINE TECHNIQUE ET ART ANTÉRIEUR

L'invention concerne un détecteur de rayonnement photonique, utilisé notamment dans le domaine de l'imagerie thermique, pour mesurer des composantes du rayonnement photonique. L'invention s'applique avantageusement pour des mesures de longueurs d'onde allant du rayonnement infrarouge, par exemple d'environ 1 µm, jusqu'aux ondes centimétriques, par exemple d'environ 1 cm. L'invention permet notamment la mesure simultanée d'au moins deux composantes quelconques du rayonnement photonique, et est avantageusement utilisée pour réaliser une mesure simultanée et homogène des deux composantes orthogonales de la polarisation linéaire du rayonnement photonique telles que les modes transverses électriques et magnétiques de la lumière. L'invention peut permettre de réaliser des observations militaires ou civiles, par exemple dans le domaine médical ou celui de la technologie des semiconducteurs.

Une mesure de la polarisation de la lumière, depuis l'infrarouge jusqu'aux ondes centimétriques, est par exemple mise en oeuvre pour réaliser une mesure directe de la polarisation de l'objet émetteur de la lumière ou du milieu que traverse cette lumière, ou, via l'utilisation de l'onde polarisée, pour faciliter des mesures spectroscopiques, comme c'est le cas dans les interféromètres de type Martin-Puplett.

Pour réaliser une telle mesure, la lumière est généralement séparée en deux composantes par un élément optique agissant sur la polarisation de la lumière reçue (fils conducteurs tendus, lame biréfringente, etc.), ces deux composantes étant ensuite analysées simultanément par deux plans de détection (sensibles à l'intensité totale) chacun destiné à la mesure d'une des deux composantes, ces deux plans de détection étant par exemple disposés l'un en face de l'autre ou l'un perpendiculairement à l'autre. Ce décalage spatial des deux plans de détection implique toutefois l'utilisation d'un volume important pour pouvoir disposer les deux plans de détection selon la configuration souhaitée.

Il est possible de n'avoir qu'un seul plan de détection en faisant appel à un modulateur (lame demi-onde, polariseur tournant, rotateur Faraday, etc.). Toutefois, la mesure des différentes composantes s'effectue dans ce cas à des instants différents.

Des détecteurs sensibles aux deux composantes de la polarisation, appelés PSB pour « Polarization Sensitive Bolometers », sont utilisés en astronomie pour la mesure simultanée des deux composantes de la polarisation du rayonnement de fond diffus cosmologique, comme décrit dans le document « A Polarisation Sensitive Bolometric Receiver for Observations of the Cosmic Microwave Background » de Jones W.C. et al., Proceedings of the SPIE, vol. 4855, pp. 227-238 (2003). Ce type de détecteur comporte un empilement de deux couches de détection croisées constituées de fils résistifs adaptés à l'impédance du vide. Pour optimiser l'absorption du rayonnement, un réflecteur, ou « backshort », est utilisé afin de former une cavité résonnante adaptée à λ/4, avec λ correspondant à la longueur d'onde destinée à être détectée. Toutefois, dans une telle configuration, la différence de position des deux couches de détection vis-à-vis du réflecteur induit une différence dans la gamme spectrale mesurée par chacune des couches de détection.

Afin d'effectuer une mesure simultanée des deux composantes de la polarisation sur un même plan avec des détecteurs fabriqués par un procédé collectif, une matrice de détecteurs réalisée par un procédé lithographique permettant d'associer deux réseaux d'antennes croisés à deux senseurs thermiques de type Transition Edge Sensor (TES) fonctionnant autour de la centaine de millikelvin est proposé dans le document « Antenna-Coupled TES Bolometer Arrays for CMB Polarimetry » de C.L. Kuo et al., Millimeter and submillimeter detectors and instrumentation for astronomy n°4, Marseille, France (2008), vol. 7020, pp. 702011.1. Dans le dispositif décrit par ce document, chaque détecteur, qui forme un pixel de la matrice, comporte des antennes dipôles formées et reliées entre elles par des fils électriquement conducteurs courant sur toute la surface du pixel. Une couche de matériau est présente en face avant de chaque pixel et des ouvertures sont réalisées à travers cette couche de matériau sous la forme de fentes à travers lesquelles les portions des fils conducteurs formant les antennes absorbent l'énergie du rayonnement reçu. Les dimensions des fentes sont adaptées à la longueur d'onde destinée à être détectée. L'énergie absorbée par les antennes est ensuite dissipée au niveau d'un élément supraconducteur localisé sur le côté du pixel.

Ce dispositif présente toutefois plusieurs inconvénients. En effet, pour assurer une grande sensibilité de détection, la puissance absorbée doit être dissipée dans une résistance de charge située sur le senseur bolométrique, ou thermomètre, qui est déporté par rapport aux antennes. La compacité du dispositif n'est donc pas optimisée. De plus, pour que le transport de ce courant induit soit réalisé sans trop de pertes, les fils conducteurs présentent des basses impédances linéiques entraînant une désadaptation des antennes vis-à-vis de l'onde détectée en raison de phénomènes de résonance dus à la mauvaise adaptation au vide. De plus, le matériau présent en face avant du détecteur, nécessaire pour masquer les parties des fils conducteurs servant à relier les antennes d'un même pixel entre elles et dans lequel les fentes sont pratiquées, perturbe l'absorption des photons par les antennes et génère des couplages parasites entre les antennes, diminuant donc l'efficacité du dispositif.

### EXPOSÉ DE L'INVENTION

Un but de la présente invention est de proposer un détecteur de rayonnement photonique ne présentant pas les inconvénients des détecteurs de l'art antérieur, c'est-à-dire dont la compacité est optimisée afin de présenter la plus grande surface de détection possible, sans désadaptation des antennes vis-à-vis de l'onde détectée ni couplage parasite entre les antennes, et permettant la mesure d'un ou plusieurs paramètres physiques, ou composantes, du rayonnement photonique sans décalage spatial ou temporel dans les mesures réalisées.

Pour cela, la présente invention propose un détecteur de rayonnement photonique, comportant au moins :
- un support formant une spirale plane à au moins quatre bras, chaque bras étant suspendu entre une première extrémité commune aux quatre bras et une deuxième extrémité, chaque bras comportant au moins un matériau résistif dont sa résistivité varie en fonction de sa température et qui est relié électriquement aux première et deuxième extrémités dudit bras,
- un premier réseau d'antennes sensibles à au moins un premier paramètre physique du rayonnement photonique et en contact thermiquement avec le matériau résistif de deux des quatre bras, appelés premiers bras,
   et dans lequel la deuxième extrémité de chaque bras est reliée électriquement à un circuit de lecture du détecteur et thermiquement à un premier puits thermique.

Dans ce détecteur, l'absorption de la lumière par les antennes provoque une élévation de température du matériau résistif de la structure de soutient, correspondant au support, du fait du transfert de chaleur entre l'antenne et le matériau résistif du support. Cela entraine une modification de la résistance électrique présentée par le matériau résistif à partir de laquelle les caractéristiques du rayonnement photoniques destinées à être mesurées sont déterminées.

La spirale formée par le support permet d'obtenir une disposition homogène des antennes au niveau de l'ensemble de la surface du détecteur tout en assurant qu'un seul croisement entre les bras de la spirale, notamment entre les premiers bras et les deux autres bras de la spirale.

De plus, étant donné que les antennes sont directement en contact thermique avec le matériau résistif du détecteur, la chaleur est dissipée localement et on évite de transporter un courant induit par la détection réalisée par les antennes. Cela permet d'éviter une désadaptation des antennes vis-à-vis de l'onde détectée en raison de phénomènes de résonance dus à la mauvaise adaptation au vide de fils conducteurs présentant des basses impédances linéiques comme dans les dispositifs de l'art antérieur. La structure de ce détecteur permet en outre de ne pas faire appel à une couche de matériau pour masquer des parties de fils conducteurs servant à relier les antennes d'un même pixel entre elles étant donné que les antennes sont en contact thermique avec le matériau résistif servant de matériau thermomètre du détecteur.

Au niveau de chacun des premiers bras, chacune des antennes du premier réseau d'antennes peut former un empilement de matériaux comprenant au moins le matériau des antennes et le matériau résistif des premiers bras.

La structure suspendue du support des antennes permet d'avoir toutes les connexions électriques disposées entre les antennes et le circuit de lecture, ce qui présente l'avantage d'éviter toute perturbation, vis-à-vis de la détection, qui serait engendrée par des conducteurs passant sur le même plan que les éléments absorbeurs.

Les deuxièmes extrémités des bras sont reliées thermiquement à un premier puits thermique, ce qui permet de bien mesurer la résistance du dispositif du fait que ces deuxièmes extrémités forment des références thermiques du détecteur.

La première extrémité commune aux quatre bras de la spirale formée par le support peut correspondre au centre de la spirale.

La première extrémité commune aux quatre bras est reliée thermiquement à un deuxième puits thermique. Ainsi, en reliant thermiquement la première extrémité commune aux quatre bras au deuxième puits thermique, on améliore les référentiels thermiques utilisés pour la détection du rayonnement photonique, et donc la précision de mesure réalisée par le détecteur. Cette liaison thermique permet d'évacuer la chaleur depuis la première extrémité vers le deuxième puits thermique. De plus, l'utilisation combinée d'un premier réseau d'antennes, c'est-à-dire plusieurs antennes disposées en réseau, couplées thermiquement avec le matériau résistif des premiers bras, et d'une première extrémité commune aux quatre bras reliée thermiquement au deuxième puits thermique confère au détecteur la possibilité de paramétrer la ou les longueurs d'ondes destinées à être détectées via notamment le choix des dimensions et de la forme de chacune des antennes.

La première extrémité commune aux quatre bras peut être reliée électriquement au circuit de lecture. En reliant électriquement la première extrémité commune aux quatre bras au circuit de lecture, cette liaison électrique contribue à l'élimination de toutes les perturbations électriques extérieures et intérieures sur les mesures de résistance de chacun des bras de la spirale. Cette liaison électrique fixe en outre le potentiel électrique de la première extrémité commune aux quatre bras, améliorant ainsi la mesure du signal.

Le premier puits thermique et le deuxième puits thermique peuvent correspondre à un même puits thermiques formé par un même élément du détecteur.

Le premier puits thermique et/ou le deuxième puits thermique peuvent être formés par le circuit de lecture. Le premier puits thermique et/ou le deuxième puits thermique peuvent être formés par un ou plusieurs éléments de réfrigération du détecteur, formant une source froide.

La liaison thermique entre la première extrémité commune aux quatre bras et le deuxième puits thermique et/ou, lorsque la première extrémité commune aux quatre bras est reliée électriquement au circuit de lecture, la liaison électrique entre la première extrémité commune aux quatre bras et le circuit de lecture, peut être formée par un premier plot formant également un premier maintien mécanique entre le support et le circuit de lecture.

La deuxième extrémité de chaque bras peut être reliée électriquement au circuit de lecture et/ou thermiquement au premier puits thermique par un deuxième plot formant un deuxième maintien mécanique entre le support et le circuit de lecture.

En variante, les fonctions de maintien mécanique, de conduction thermique et de conduction électrique décrites ci-dessus peuvent être réalisées respectivement par différents plots afin de découpler les contraintes sur ces plots.

Le détecteur peut comporter en outre un deuxième réseau d'antennes sensibles à au moins un deuxième paramètre physique du rayonnement photonique et en contact thermiquement avec le matériau résistif des deux autres des quatre bras, appelés deuxièmes bras.

Dans ce cas, le premier et le deuxième paramètres physiques peuvent être deux composantes du rayonnement photonique ou deux longueurs d'ondes différentes du rayonnement photonique. Un tel détecteur peut donc être adapté pour réaliser une détection de deux couleurs différentes.

Le premier et le deuxième paramètres physiques peuvent être deux composantes orthogonales l'une par rapport à l'autre d'une polarisation linéaire du rayonnement photonique (telles que les modes transverse électriques et magnétiques), les antennes du premier réseau d'antennes peuvent être des antennes dipôles formées par des premiers segments de matériau électriquement conducteur orientés parallèlement à une première direction, les antennes du deuxième réseau d'antennes peuvent être des antennes dipôles formées par des deuxièmes segments de matériau électriquement conducteur orientés parallèlement à une deuxième direction, la première et la deuxième directions pouvant être sensiblement perpendiculaires l'une par rapport à l'autre, et une longueur de chacun des premiers segments et des deuxièmes segments peut être sensiblement égale à la moitié d'une longueur d'onde du rayonnement photonique destinée à être détectée respectivement par les antennes du premier réseau d'antennes et par les antennes du deuxième réseau d'antennes. Un tel détecteur permet une détection homogène et simultanée des deux composantes orthogonales de la polarisation du rayonnement photonique, quelque soit la taille du détecteur.

Dans ce cas, une longueur de chacun des premiers segments peut être sensiblement égale à une longueur de chacun des deuxièmes segments.

En variante, chacune des antennes du premier et du deuxième réseaux d'antennes peut comporter deux segments de dimensions sensiblement similaires et se croisant sensiblement perpendiculairement l'un par rapport à l'autre au niveau de leur centre en formant un motif de croix, et une longueur de chacun des segments des antennes peut être sensiblement égale à la moitié d'une longueur d'onde du rayonnement photonique destinée à être détectée.

Dans ce cas, la longueur de chacun des segments de chacune des antennes du premier réseau d'antennes peut être sensiblement égale à la longueur de chacun des segments de chacune des antennes du deuxième réseau d'antennes (avec dans ce cas une détection d'une même longueur d'onde par les deux réseaux d'antennes), ou la longueur de chacun des segments de chacune des antennes du premier réseau d'antennes peut être différente de la longueur de chacun des segments de chacune des antennes du deuxième réseau d'antennes (avec dans ce cas une détection de deux longueurs d'ondes différentes par les deux réseaux d'antennes).

Le matériau résistif des deux autres des quatre bras, appelés deuxièmes bras, peut être en contact thermique avec aucune antenne.

Dans ce cas, chacune des antennes du premier réseau d'antennes peut comporter deux segments de dimensions sensiblement similaires et se croisant sensiblement perpendiculairement l'un par rapport à l'autre au niveau de leur centre en formant un motif de croix, et une longueur de chacun des segments des antennes peut être sensiblement égale à la moitié d'une longueur d'onde du rayonnement photonique destinée à être détectée. Une telle configuration permet de discriminer le signal de mode commun détecté par les deuxièmes bras vis-à-vis du rayonnement photonique détecté au niveau des deux premiers bras comportant le premier réseau d'antennes.

Les antennes du premier réseau d'antennes peuvent être disposées sur les premiers bras, et/ou les antennes du deuxième réseau d'antennes peuvent être disposées sur les deuxièmes bras.

Le support peut comporter du silicium formant en outre le matériau résistif, et/ou les antennes du premier et/ou du deuxième réseau d'antennes peuvent comporter au moins un matériau métallique ou supraconducteur ou semi-conducteur.

La résistance de surface de chacune des antennes du premier et/ou du deuxième réseau d'antennes peut être comprise entre environ 20 Ω et 2000 Ω, et/ou la résistance de surface du matériau résistif peut être supérieure à environ 10 kΩ/carré.

Le détecteur peut comporter en outre un réflecteur disposé entre les antennes et le circuit de lecture tel qu'une distance entre le réflecteur et les antennes soit égale à environ un quart d'une longueur d'onde du rayonnement photonique destinée à être détectée. On forme ainsi sous les antennes une cavité optique adaptée en λ/4.

Le détecteur peut comporter en outre une ou plusieurs portions de matériau diélectrique disposées entre les antennes et le matériau résistif du support.

L'invention concerne également un dispositif de détection d'un rayonnement photonique comportant une matrice de détecteurs tels que décrits précédemment.

L'invention peut servir à différentes applications, comme par exemple :
- imagerie infrarouge : mesure de la polarisation qui permet d'augmenter le contraste de la scène mesurée, en particulier par élimination sélective des réflexions sur des objets dont l'angle de visée par rapport à la source modifie le contenu des différentes composantes de la polarisation ;
- spectro-imagerie : dans un spectromètre à transformée de Fourier de type Martin-Puplett réalisant de l'imagerie. Des matrices de détecteurs sensibles aux deux composantes de la polarisation permettent alors d'augmenter le rapport signal sur bruit sans avoir à déployer deux dispositifs (plans focaux) indépendants. Ceci permet un gain considérable de volume et a un impact très positif sur le budget de puissance des systèmes nécessitant du refroidissement ;
- astrophysique : La mesure de la polarisation associée aux fluctuations du fond diffus cosmologique. Les motifs dans la carte du rayonnement à 3K décrits par la polarisation sont les traces des ondes gravitationnelles primordiales qui se sont exercées dans les premiers instants de l'Univers, et que l'on décrit par une phase d'inflation. L'explication de la structuration des galaxies au cours du temps s'explique en partie par la présence de champ magnétique qui affecte les écoulements de matière froide ionisée. Malheureusement, le champ magnétique ne peut être tracé qu'indirectement. L'émission de lumière de la matière froide, dans le submillimétrique, est affectée par la présence de ce champ magnétique en favorisant une composante de la polarisation. La mesure du déséquilibre d'émission permet de remonter non seulement à la direction du champ magnétique dans lequel baigne cette matière mais également à son intensité.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente une vue de dessus d'un exemple de réalisation d'un premier et d'un deuxième réseaux d'antennes d'un détecteur de rayonnement photonique, objet de la présente invention, selon un premier mode de réalisation ;
- la figure 2 représente une vue de dessus d'une première partie du support du détecteur de rayonnement photonique, objet de la présente invention, selon le premier mode de réalisation, sur laquelle le premier réseau d'antennes est destiné à être réalisé ;
- la figure 3 représente une vue de dessus d'une deuxième partie du support du détecteur de rayonnement photonique, objet de la présente invention, selon le premier mode de réalisation, sur laquelle le deuxième réseau d'antennes est destiné à être réalisé ;
- la figure 4 représente une vue de dessus de l'ensemble du support du détecteur de rayonnement photonique, objet de la présente invention, selon le premier mode de réalisation ;
- la figure 5 représente une vue de dessus du détecteur de rayonnement photonique, objet de la présente invention, selon le premier mode de réalisation ;
- la figure 6 représente une vue en coupe de profil d'une partie du détecteur de rayonnement photonique, objet de la présente invention, selon le premier mode de réalisation ;
- la figure 7 représente le schéma électrique d'un exemple d'un circuit formé par le détecteur de rayonnement photonique, objet de la présente invention, selon le premier mode de réalisation ;
- la figure 8 représente une vue de dessus du détecteur de rayonnement photonique, objet de la présente invention, selon un deuxième mode de réalisation ;
- la figure 9 représente une vue de dessus du détecteur de rayonnement photonique, objet de la présente invention, selon un troisième mode de réalisation ;
- la figure 10 représente une vue de dessus du détecteur de rayonnement photonique, objet de la présente invention, selon un quatrième mode de réalisation ;
- la figure 11 représente une vue de dessus d'un dispositif de détection, également objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

On décrit tout d'abord un détecteur de rayonnement photonique 100 selon un premier mode de réalisation.

Dans ce premier mode de réalisation, le détecteur 100 est destiné à détecter un premier et un deuxième paramètres physiques du rayonnement photonique, appelée lumière, correspondant à deux composantes orthogonales l'une par rapport à l'autre de la polarisation linéaire de la lumière, c'est-à-dire dont des plans de polarisation sont perpendiculaires l'un par rapport à l'autre, correspondant ici aux modes transverses électriques et magnétiques de la lumière.

Le détecteur 100 comporte un premier réseau d'antennes 102 destinées à détecter une première de deux composantes de la polarisation linéaire de la lumière, et un deuxième réseau d'antennes 104 destinée à détecter une deuxième des deux composantes de la polarisation linéaire de la lumière.

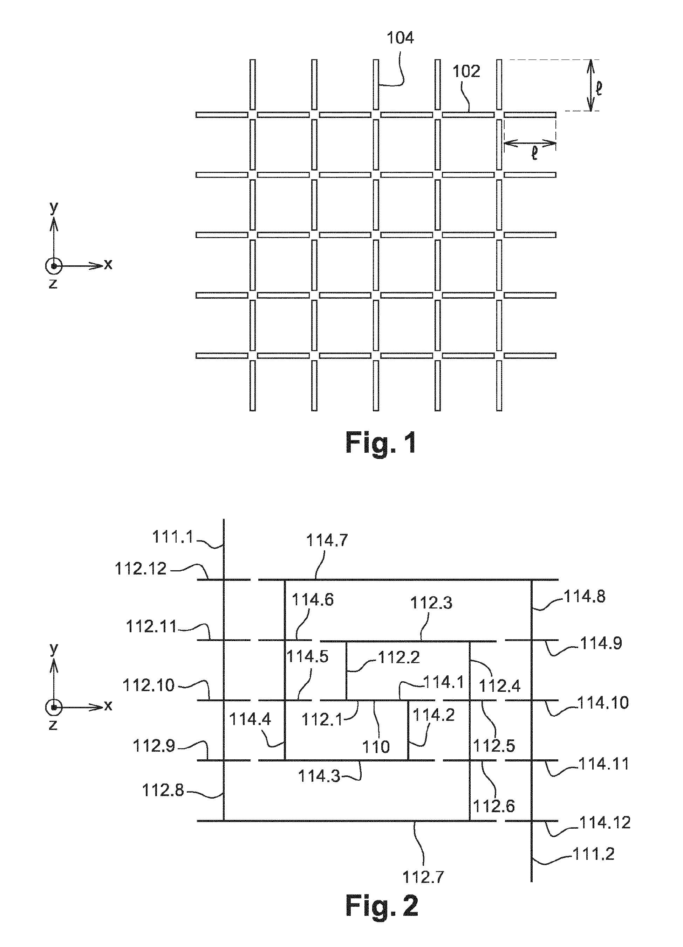

La figure 1 représente une vue de dessus d'un exemple de réalisation du premier réseau d'antennes 102 et du deuxième réseau d'antennes 104.

Les antennes 102 du premier réseau correspondent à des antennes dipôles chacune formée par un premier segment de matériau électriquement conducteur. Les premiers segments formant les antennes 102 sont tous orientés parallèlement à un même axe, c'est-à-dire comportent tous leur plus grande dimension orientée selon une même direction (parallèle à l'axe X sur l'exemple de la figure 1). De plus, les antennes 102 sont alignées en formant plusieurs lignes parallèles les unes par rapport aux autres et régulièrement espacées les unes des autres. Le premier réseau d'antennes 102 permet ici de réaliser une absorption de la composante « horizontale » de la polarisation de l'onde lumineuse, c'est-à-dire la composante dont le plan de polarisation est parallèle au plan (X,Z).

Les antennes 104 du deuxième réseau correspondent à des antennes dipôles chacune formée par un deuxième segment de matériau électriquement conducteur. Les deuxièmes segments formant les antennes 104 sont tous orientés parallèlement à un même axe, c'est-à-dire comportent tous leur plus grande dimension orientée selon une même direction (parallèle à l'axe Y sur l'exemple de la figure 1). De plus, les antennes 104 sont alignées en formant plusieurs colonnes parallèles les unes par rapport aux autres et régulièrement espacées les unes des autres. Le deuxième réseau d'antennes 104 permet donc ici de réaliser une absorption de la composante « verticale » de la polarisation de l'onde lumineuse, c'est-à-dire la composante dont le plan de polarisation est parallèle au plan (Y,Z).

Les antennes 102 sont orientées perpendiculairement aux antennes 104 afin de réaliser la mesure des modes transverses électriques et magnétiques de la lumière. Le premier et le deuxième réseaux d'antennes 102, 104 forment donc un ensemble d'antennes dipôles croisées, formant un quadrillage dans le plan (X,Y) qui est perpendiculaire aux deux plans de polarisation des composantes de la lumière destinées à être détectées. Cette disposition est due au fait que les antennes de chacun des premier et deuxième réseaux d'antennes sont disposées sur un support formant un motif de spirale à quatre bras qui est détaillé plus loin.

Dans l'exemple de réalisation décrit ici, les premiers et deuxièmes segments ont tous une même longueur du fait que les antennes 102 et 104 sont destinées à détecter les composantes d'une même longueur d'onde. La longueur « l » de chacun des premiers et deuxièmes segments est égale à environ la moitié de la longueur d'onde (λ/2) de la lumière destinée à être détectée par le détecteur 100. En variante, les premiers segments de matériau électriquement conducteur formant les antennes 102 peuvent avoir une longueur différente de celle des deuxièmes segments de matériau électriquement conducteur formant les antennes 104.

La résistance de surface de chacune des antennes 102 et 104, dans la direction de détection (parallèlement à l'axe X pour les antennes 102 et parallèlement à l'axe Y pour les antennes 104) est en relation directe avec l'impédance du vide (de 377 Ω/carré en présence d'une cavité résonante comme décrit plus loin, ou de 188 Ω/carré sans cavité résonante). Pour des raisons d'adaptation d'impédance, et dans le but d'avoir une dissipation s'effectuant localement dans chacune des antennes 102 et 104, la résistance de surface de chaque antenne 102 et 104 est comprise entre environ 20 et 2000 Ω/carré.

Le matériau électriquement conducteur formant les antennes 102 et 104 peut correspondre à un matériau métallique (par exemple de l'Au, du Cu, du Bi, de l'Al, du Ti), ou un matériau supraconducteur (par exemple un alliage de type TiN, NbTi, TiAu, MoAu), ou encore un matériau semi-conducteur (par exemple du Ge dopé ou du Si dopé).

Le nombre d'antennes 102 et 104 du détecteur 100 dépend de la taille du détecteur 100 et de la longueur d'onde destinée à être détectée. Chacun des premier et deuxième réseaux d'antennes 102 et 104 comporte par exemple un nombre d'antennes compris entre 2 et 50.

Le détecteur 100 comporte en outre un support 106 sur lequel sont disposés le premier réseau d'antennes 102 et le deuxième réseau d'antennes 104. Le support 106 sert ici à la fois de support mécanique aux antennes 102 et 104, mais également d'élément résistif formant le thermomètre du détecteur 100. Pour réaliser ces deux fonctions, le support 106 est à base d'un matériau présentant une tenue mécanique, ou rigidité ou raideur, suffisante pour maintenir les antennes 102 et 104 sensiblement dans un même plan (qui est parallèle au plan (X,Y)), mais également dont la résistivité varie en fonction de sa température, par exemple du silicium dopé. Le support 106 peut être réalisé par gravure d'une couche de silicium. Pour certaines applications telles que la détection de rayonnement photonique dans le domaine FIR (infrarouge lointain), submillimétrique ou millimétrique, le support 106 est avantageusement réalisé à partir d'un substrat de type SOI (silicium sur isolant) par dépôt et gravure du silicium.

Les antennes 102 et 104 sont isolées électriquement du support 106 par un matériau isolant 108, par exemple du SiO₂, disposé entre les antennes 102, 104 et le support 106.

Le support 106 forme un ensemble de poutres horizontales (parallèles à l'axe X) et verticales (parallèles à l'axe Y) reliées entre elles en formant une spirale plane à quatre bras, ou quatre branches. Ainsi, les antennes 102 et 104 sont réparties de façon homogène sur l'ensemble de la surface de détection du détecteur 100.

La figure 2 représente une première partie du support 106 sur laquelle les antennes 102 du premier réseau sont disposées. La référence 110 désigne le centre de la spirale formée par le support 106. Cette première partie du support 106 comporte des portions de matériau, ou poutres, s'étendant parallèlement aux antennes 102 et sur lesquelles les antennes 102 sont disposées, ainsi que des portions s'étendant perpendiculairement aux antennes 102 pour former une continuité électrique, thermique et mécanique selon un motif correspondant à une première spirale à deux bras, ces deux bras s'étendant chacun depuis une première extrémité correspondant au centre 110 jusqu'à une deuxième extrémité respectivement référencée 111.1 et 111.2. Sur l'exemple de la figure 2, l'un des deux bras de la première spirale est formé, en partant du centre 110 jusqu'à la deuxième extrémité 111.1, par les portions du support 106 portant les références 112.1 à 112.12, et l'autre des deux bras de la première spirale est formé, depuis le centre 110 jusqu'à la deuxième extrémité 111.2, par les portions du support 106 portant les références 114.1 à 114.12.

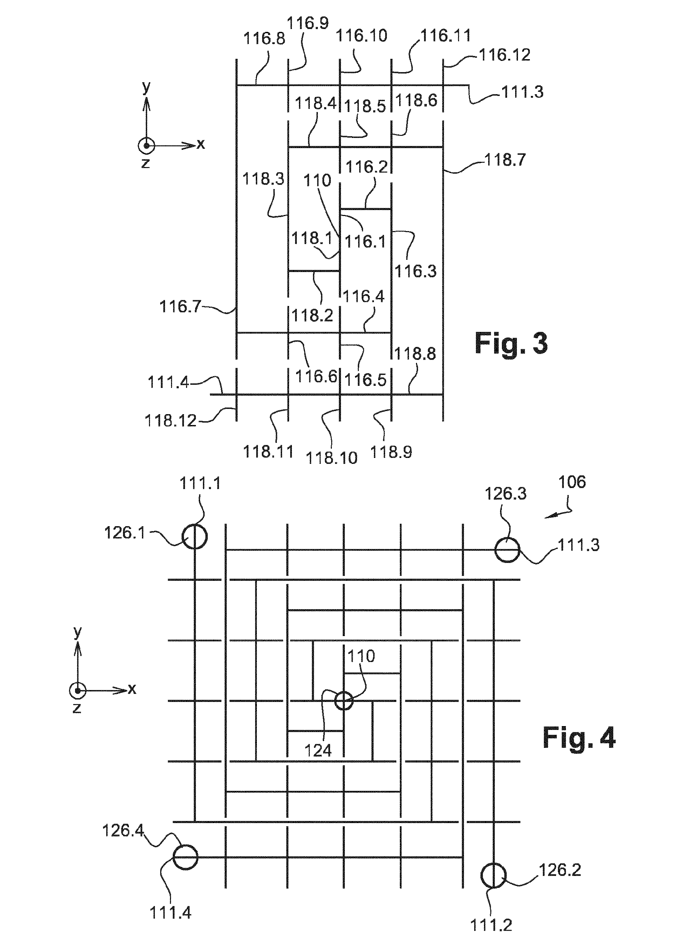

La figure 3 représente une deuxième partie du support 106 sur laquelle les antennes 104 du deuxième réseau sont disposées. Cette deuxième partie du support 106 comporte des portions de matériau, ou poutres, s'étendant parallèlement aux antennes 104 et sur lesquelles les antennes 104 sont disposées, ainsi que des portions s'étendant perpendiculairement aux antennes 104 pour former une continuité électrique, thermique et mécanique selon un motif correspondant à une deuxième spirale à deux bras, ces deux bras s'étendant chacun depuis une première extrémité correspondant au centre 110 (correspondant au même point que le centre 110 précédemment décrit en liaison avec la figure 2) jusqu'à une deuxième extrémité respectivement référencée 111.3 et 111.4. Sur l'exemple de la figure 3, l'un des deux bras de la deuxième spirale est formé, en partant du centre 110 jusqu'à la deuxième extrémité 111.3, par les portions du support 106 portant les références 116.1 à 116.12, et l'autre des deux bras de la spirale est formé, depuis le centre 110 jusqu'à la deuxième extrémité 111.4, par les portions du support 106 portant les références 118.1 à 118.12.

Le support 106 correspond à la réunion, dans un même plan, des deux parties précédemment décrites en liaison avec les figures 2 et 3. Le support 106 est représenté dans son ensemble sur la figure 4. Ainsi, les différents éléments du support 106 forment ensemble une spirale à quatre bras correspondant à la réunion de la première spirale à deux bras et de la deuxième spirale à deux bras précédemment décrites. Le centre 110 correspond au seul point de croisement entre la première partie du support 106 décrite en liaison avec la figure 2 et la deuxième partie du support 106 décrite en liaison avec la figure 3. Ce centre 110 forme donc l'unique point de liaison mécanique, électrique et thermique entre les deux parties du support 106, et donc entre les deux réseaux d'antennes 102 et 104.

Du fait que les antennes 102 et 104 sont disposées sur le support 106, les portions de matériau du support 106 ont de préférence une résistance de surface supérieure à environ 10 kΩ/carré afin d'éviter de perturber le fonctionnement des antennes 102, 104 qu'elles supportent.

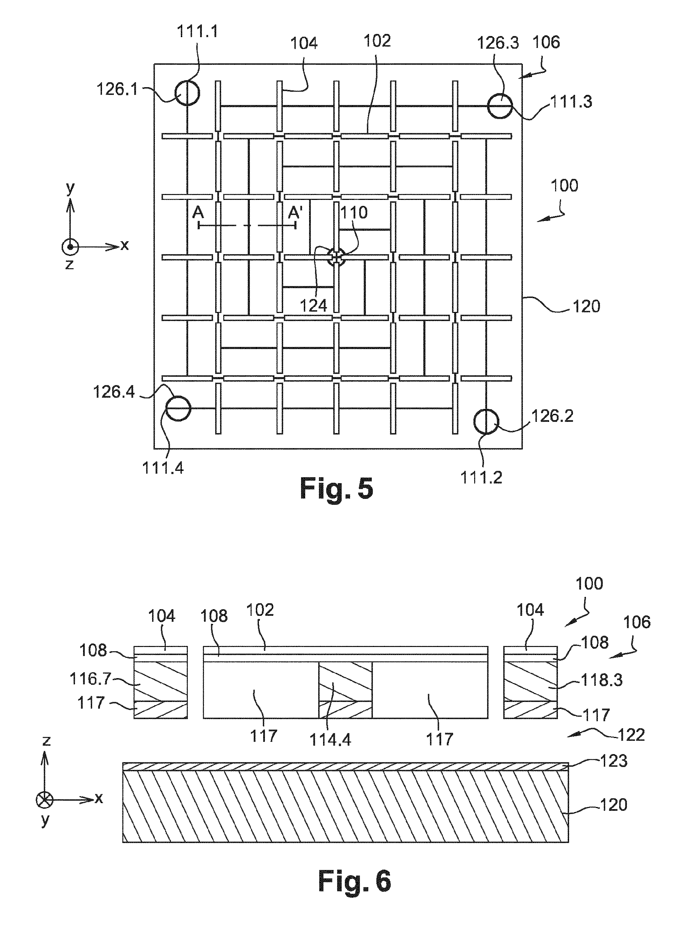

La figure 5 représente une vue de dessus du détecteur 100 comportant le support 106 sur lequel sont disposés le premier réseau d'antennes 102 et le deuxième réseau d'antennes 104. La figure 6 correspond à une vue en coupe de profil d'une partie du détecteur 100 le long du segment AA' visible sur la figure 5.

Sur l'exemple de la figure 6, les éléments résistifs formant le thermomètre du détecteur 100 reposent sur les portions de matériau 117 du support 106 remplissant la fonction de support mécanique du support 106. Une telle configuration du support 106 est avantageuse lorsque le détecteur 100 est destiné à être utilisé pour des applications hautes températures (par exemple supérieures ou égales à environ 77 K).

Le détecteur 100 comporte en outre un substrat comportant un circuit de lecture 120 et qui est disposé sous le support 106 tel qu'une cavité optique 122 soit formée entre le support 106 et le circuit de lecture 120. Le support 106 est avantageusement relié mécaniquement à une face supérieure du circuit de lecture 120 par un premier plot 124 s'étendant perpendiculairement au plan dans lequel se trouve le support 106 (perpendiculairement au plan (X,Y)). Ce premier plot 124 supporte mécaniquement le support 106 au niveau du centre 110, c'est-à-dire au niveau des premières extrémités des quatre bras de la spirale formée par le support 106, et est ici également en contact électrique et thermique avec le support 106 au niveau de son centre 110. Du fait que le centre 110 forme l'unique point de liaison mécanique, électrique et thermique entre les deux parties du support 106, et donc entre les deux réseaux d'antennes 102 et 104, cet unique point de croisement empêche notamment l'échauffement de l'un des réseaux d'antennes 102, 104 par l'autre étant donné le très faible couplage thermique entre les bras sur lesquels les deux réseaux d'antennes 102 et 104 sont disposés. Dans cet exemple de réalisation, outre la fonction de maintien mécanique remplie par le premier plot 124, ce dernier forme également une liaison thermique entre le centre 110 et un puits thermique formé par le circuit de lecture 120. De plus, le premier plot 124 peut être également électriquement conducteur et former une liaison électrique entre le centre 110 et le circuit de lecture 120.

Le support 106 est également relié mécaniquement à la face supérieure du circuit de lecture 120 par quatre deuxièmes plots 126.1 à 126.4, ici électriquement conducteur et s'étendant perpendiculairement au plan dans lequel se trouve le support 106 (perpendiculairement au plan (X,Y)), et supportant mécaniquement le support 106 au niveau des deuxièmes extrémités 111.1 - 111.4 des quatre bras de la spirale formée par le support 106. Les quatre deuxièmes plots électriquement conducteurs 126.1 à 126.4 sont en contact thermique et électrique avec le support 106, et forment chacun une liaison thermique et électrique entre l'un des bras de la spirale et le circuit de lecture 120 qui forme un puits thermique auquel sont reliées thermiquement les deuxièmes extrémités 111.1 - 111.4. Les deuxièmes plots 124 et 126.1 - 126.4 forment donc des points d'ancrage du support 106 sur le circuit de lecture 120. Les deuxièmes plots électriquement conducteurs 126.1 - 126.4 sont réalisés en un matériau suffisamment résistif (à l'échelle de l'onde détectée) pour ne pas perturber l'absorption de l'onde par les antennes 102, 104, mais comparativement peu résistifs par rapport aux valeurs des résistances des bras de la spirale formée par le support 106 de façon à ne pas fausser la valeur de lecture des résistances de ces bras, par exemple. Les plots 124 et 126.1- 126.4 sont par exemple réalisés en cuivre, enrobés ou non d'au moins un matériau supraconducteur, en or, ou tout autre matériau bon conducteur et dense, ou encore du silicium ou de la silice.

Le premier plot 124 forme une liaison thermique avec un puits thermique du détecteur 100 auquel sont reliées les premières extrémités des bras de la spirale, ce puits thermique étant couplé à la source froide du détecteur 100 correspondant au substrat et plus particulièrement le circuit de lecture 120. Les quatre deuxièmes plots électriquement conducteurs 126.1 à 126.4 forment des liaisons électriques et thermiques entre chacune des deuxièmes extrémités des bras de la spirale et le circuit de lecture 120. Chaque bras de la spirale formée par le support 106 est donc suspendu entre sa première extrémité (commune aux quatre bras et correspondant au centre de la spirale) et sa deuxième extrémité, les maintiens mécaniques du support 106 étant formés par le premier plot 124 et les deuxièmes plots 126.1-126.4.

Avec un tel détecteur 100, la lumière reçue par les réseaux d'antennes 102 et 104 est absorbée par celles-ci. Cette absorption de la lumière par les antennes 102, 104 provoque une élévation de la température de la structure de soutien des antennes 102, 104, c'est-à-dire des bras de la spirale formée par le support 106, du fait du transfert de chaleur entre les antennes 102, 104 et le support 106. Etant donné le caractère résistif du matériau (ici le silicium) avec lequel est formé le support 106, la résistance électrique de chacun des bras formés par le support 106 varie alors selon la chaleur produite par les antennes se trouvant sur chacun des bras. Les valeurs des deux composantes de la polarisation linéaire de la lumière peuvent alors être déduites à partir des valeurs de ces variations de résistance électrique.

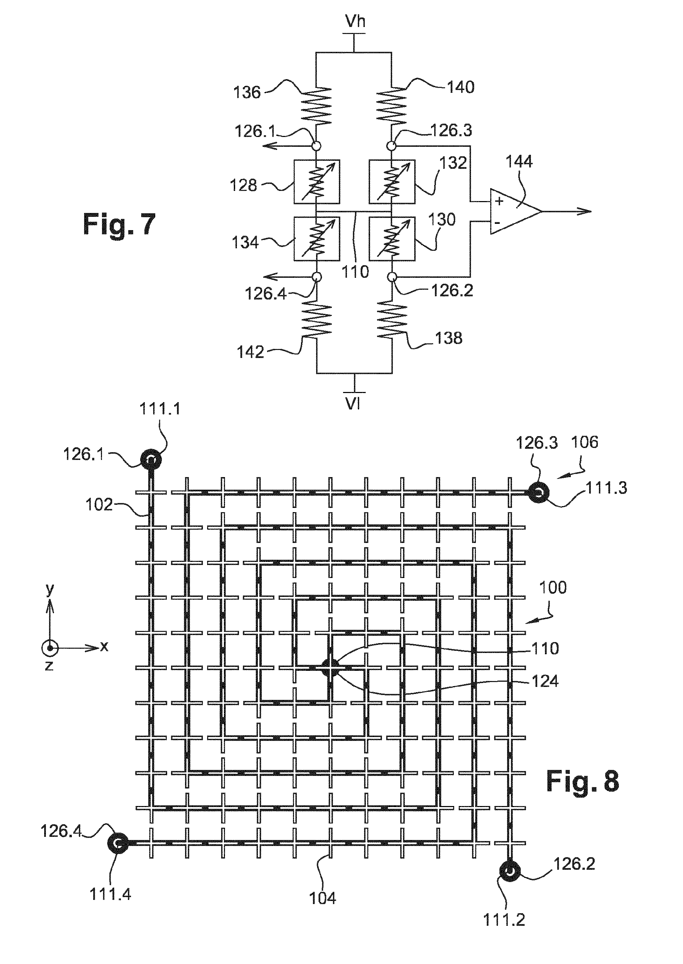

La figure 7 représente le schéma électrique d'un exemple d'un circuit formé par le détecteur 100.

Ce circuit comporte quatre résistances variables référencées 128, 130, 132 et 134. Chacune des résistances variables 128 et 130 correspond à la résistance variable formée par l'un des deux bras de la spirale du support 106 sur lesquels sont disposées les antennes 102 du premier réseau, et chacune des résistances variables 132 et 134 correspond à la résistance variable formée par l'un des deux bras de la spirale du support 106 sur lesquels sont disposées les antennes 104 du deuxième réseau. Des premières bornes de chacune des résistances variables 128, 130, 132 et 134 sont reliées électriquement entre elles, et correspond au fait que les premières extrémités des quatre bras de la spirale sont reliées électriquement entre elles au niveau du centre 110 de la spirale. Des deuxièmes bornes de chacune des résistances variables 128, 130, 132 et 134 correspondent respectivement aux deuxièmes extrémités 111.1 - 111.4 des bras de la spirale, et sont donc respectivement reliées aux plots électriquement conducteurs 126.1- 126.4.

Le détecteur 100 comporte également quatre résistances électriques 136, 138, 140 et 142, formant quatre résistances de charge de valeurs fixes et égales entre elles, situées à l'extérieur de la structure suspendue, par exemple dans le circuit de lecture 120. Chacune de ces quatre résistances électriques 136, 138, 140, 142 comporte une première borne reliée électriquement à l'un des plots électriquement conducteurs 126.1 - 126.4. Une première tension de polarisation Vh est appliquée sur des deuxièmes bornes des résistances 136 et 140, et une deuxième tension de polarisation VI est appliquée sur des deuxièmes bornes des résistances 138 et 142. Dans cette configuration, et pour des raisons de symétrie, la tension au centre 110 de la spirale est toujours égale à (Vh+VI)/2. Le plot 124 est avantageusement relié électriquement au circuit de lecture 120 afin d'améliorer les mesures réalisées.

Ainsi, dans ce circuit, le courant qui le traverse est fourni par une source de tension associée aux quatre résistances de charge identiques 136, 138, 140 et 142 et délivrant les tensions de polarisation Vh et VI. Ces quatre résistances de charge 136, 138, 140 et 142 relient donc les bornes haute et basse des tensions de polarisation aux quatre points du circuit correspondant aux quatre plots électriquement conducteurs 126.1- 126.4.

Quand les résistances variables 132 et 134 (respectivement 128 et 130) varient de la même valeur, du fait que les deux bras correspondants réalisent sensiblement une même absorption, les variations de la tension au plot 126.3 ou 126.4 (respectivement 126.2 ou 126.1) sont donc fonction du flux absorbé dans chacune des polarisations, indépendamment.

Ce circuit permet de réaliser simultanément la mesure du flux de chacune des composantes de l'onde, c'est-à-dire chacune des composantes de la polarisation de la lumière reçue, par la mesure de la tension au niveau des plots électriquement conducteurs 126.1 (ou 126.2) et 126.4 (ou 126.3), la tension obtenue au niveau du plot 126.1 (ou 126.2) correspondant à la composante de la polarisation de la lumière mesurée par le premier réseau d'antennes 102, et celle obtenue au niveau du plot 126.4 (ou 126.3) correspondant à la composante de la polarisation de la lumière mesurée par le deuxième réseau d'antennes 104, par rapport à la masse.

Dans cet exemple de réalisation, le détecteur 100 comporte en outre un amplificateur opérationnel 144 dont les entrées sont reliées aux plots électriquement conducteurs 126.2 et 126.3. Le signal différentiel mesuré par cet amplificateur 144 est représentatif du degré de polarisation de la lumière reçue par le détecteur 100. Cet amplificateur 144 correspond à un des éléments du circuit de lecture 120. En variante, le signal différentiel mesuré pourrait correspondre à la différence de tension mesurée entre les plots électriquement conducteurs 126.1 et 126.4. En variante, il est possible que le détecteur 100 réalise uniquement la mesure des valeurs absolues des composantes de la polarisation, ou bien uniquement la mesure différentielle représentative du degré de polarisation de la lumière.

La mesure simultanée de la valeur absolue de chacune des composantes de la polarisation de la lumière, ainsi que de la différence entre ces deux composantes via l'amplificateur différentiel 144, est possible grâce à la redondance de l'information associée au fait que les points de lecture correspondent aux plots électriquement conducteurs 126.1-126.4.

De manière avantageuse, la cavité optique 122 formée entre le support 106 et le circuit de lecture 120 peut correspondre à une cavité résonante obtenue en disposant sur le circuit de lecture 120 un matériau réflecteur 123 apte à réfléchir la lumière reçue vers le support 106, et donc vers les antennes 102, 104. Ce matériau réflecteur 123 correspond par exemple à un matériau métallique, tel que de l'or, de l'argent ou de l'aluminium, ou diélectrique à fort indice, telle que du verre, du quartz, ou même du germanium ou du silicium lorsque le détecteur 100 est refroidi pour fonctionner à basse température. La distance entre ce matériau réflecteur 123 et les antennes 102, 104 est égale à environ un quart de la longueur d'onde (λ/4) de la lumière destinée à être détectée. Ainsi, on améliore l'efficacité de détection du détecteur 100. Ce matériau réflecteur peut servir à former également un circuit de masse et un blindage électromagnétique, et permet dans ce cas d'éviter toute perturbation, vis-à-vis de la détection, par des conducteurs passant sur le même plan que les éléments absorbeurs.

La figure 8 représente une vue de dessus du détecteur 100 selon un deuxième mode de réalisation. Sur cette figure 8, le support 106 et les antennes 102 et 104 disposées sur le support 106 sont visibles.

Dans ce deuxième mode de réalisation, le premier réseau d'antennes 102 et le deuxième réseau d'antennes 104 ne sont pas formés par des segments droits orientés perpendiculairement les uns par rapport aux autres. Dans ce deuxième mode de réalisation, les motifs des antennes du premier réseau et du deuxième réseau sont tous similaires. Ainsi, des antennes 102 et 104 de motifs similaires sont disposées sur les quatre bras de la spirale formée par le support 106. Dans le deuxième mode de réalisation décrit ici, les antennes 102 et 104 ont chacune un motif de croix, c'est-à-dire comporte chacune deux segments de matériau conducteur (métallique, supraconducteur, ou encore semi-conducteur) de dimensions sensiblement similaires et se croisant sensiblement perpendiculairement l'un par rapport à l'autre au niveau de leur centre. De plus, une longueur de chacun des segments des antennes est sensiblement égale à la moitié d'une longueur d'onde du rayonnement photonique destinée à être détectée. Ainsi, chacune des antennes 102 et 104 est apte à détecter une même longueur d'onde selon les deux composantes de la polarisation de la lumière.

Les portions de matériau formant le support 106 sont adaptées pour supporter les segments de matériau des antennes 102 et 104. Ainsi, chacun des bras de la spirale du support 106 est formé par une succession de portions de matériau correspondant au motif des antennes à supporter, ici une succession de portions en forme de croix.

Les autres éléments du détecteur 100 selon le deuxième mode de réalisation sont similaires à ceux précédemment décrits pour le détecteur 100 selon le premier mode de réalisation.

Un tel détecteur 100 selon ce deuxième mode de réalisation permet de réaliser une lecture différentielle du signal produit par le flux lumineux absorbé par les antennes du fait que les antennes des deux réseaux d'antennes présentent, dans les deux direction orthogonales, la même taille caractéristique et la même impédance de surface, et détectent donc une même longueur d'onde.

D'autres motifs d'antennes peuvent être envisagés, par exemple en forme de boucles ou de polygones, de rond, de carré, de triangle, en forme de « Y », etc.

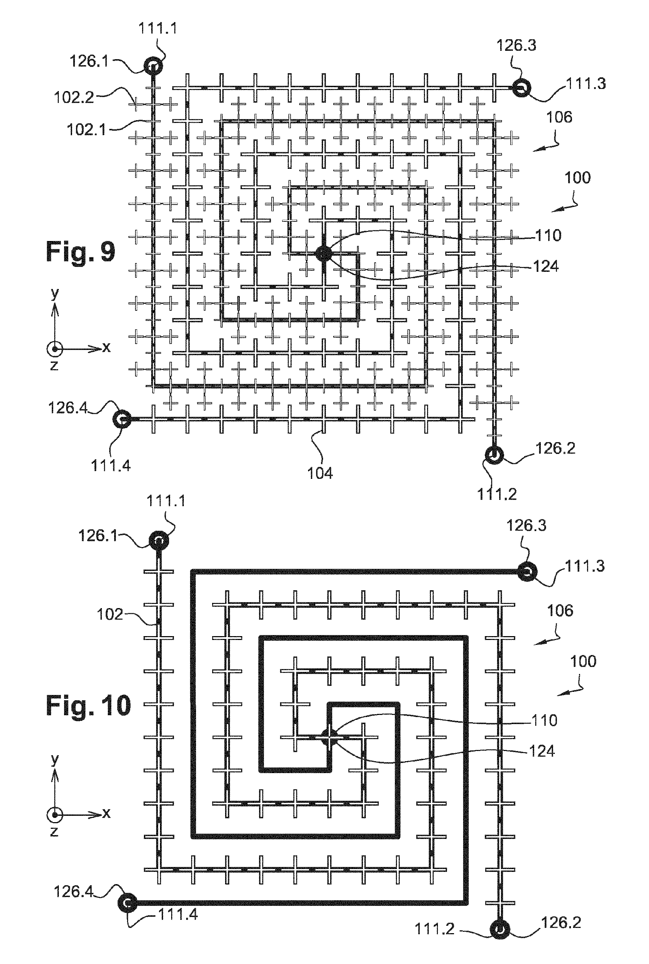

La figure 9 représente une vue de dessus du détecteur 100 selon un troisième mode de réalisation. Sur cette figure 9, le support 106 et les antennes 102 et 104 disposées sur le support 106 sont visibles.

Comme dans le deuxième mode de réalisation précédemment décrit, chacune des antennes 102 et 104 correspond à deux segments de matériau conducteur se croisant en formant un motif de croix. Par contre, dans ce troisième mode de réalisation, les dimensions des antennes 102 du premier réseau sont différentes de celles des antennes 104 du deuxième réseau. Sur l'exemple de la figure 9, les dimensions des antennes 102 sont inférieures à celles des antennes 104. Cette différence de dimensions implique que les longueurs d'ondes détectées par les deux réseaux d'antennes 102 et 104 sont différentes. De plus, sur l'exemple de la figure 9, certaines antennes référencées 102.2 sont juxtaposées aux antennes référencées 102.1 se trouvant sur les axes principaux des bras de la spirale. Les portions du support 106 sur lesquelles sont disposées ces antennes 102.2 font toutefois parties des bras de la spirale sur lesquels sont disposées les antennes du premier réseau d'antennes 102.

La figure 10 représente une vue de dessus du détecteur 100 selon un quatrième mode de réalisation. Sur cette figure 10, le support 106 et les antennes 102 disposées sur le support 106 sont visibles.

Dans ce quatrième mode de réalisation, le détecteur 100 comporte un seul réseau d'antennes 102 disposées sur le support 106. Ainsi, deux des quatre bras de la spirale formée par le support 106 ne sont pas recouverts par des antennes, le premier réseau d'antennes 102 étant disposé sur les deux autres bras de la spirale formée par le support 106. Dans l'exemple décrit ici, les antennes 102 du premier réseau ont chacune un motif de croix.

Ainsi, le détecteur 100 selon le quatrième mode de réalisation permet de discriminer de façon absolue le signal en provenance de l'optique (signal absorbé par les antennes 102) du signal de mode commun pouvant provenir de fluctuations thermiques, de perturbations électromagnétique ou du fait de micro-vibrations subies par le détecteur 100, réalisant donc une réjection de ces modes communs.

En variante de tous les modes de réalisation précédemment décrits, il est possible que les antennes (du premier et/ou du deuxième réseau) ne soient disposées que sur une partie de la longueur des bras de la spirale formée par le support 106. Dans ce cas, il est possible que seules ces parties des bras sur lesquelles les antennes sont disposées soient à base d'un matériau résistif.

En outre, il est également possible que les antennes ne soient pas réalisées sur le support 106, mais sous le support 106 telles que ces antennes soient disposées entre le support 106 et le circuit de lecture 120, et/ou sur les côtés des bras formés par le support 106.

Dans les modes de réalisation précédemment décrits, chacune des antennes 102, 104 correspond à un segment de matériau ou à plusieurs segments de matériaux formant un motif, par exemple une croix. Dans une variante de réalisation, chacune des antennes 102 et/ou 104 peut correspondre à plusieurs segments de matériau disposés parallèlement les uns à côté des autres, ou formant plusieurs motifs disposés les uns à côté des autres. Ainsi, sur chaque bras de la spirale formée par le support 106, les segments de matériau des antennes forment plusieurs spirales imbriquées les unes dans les autres. Une telle variante de réalisation permet de réduire la résistance électrique des antennes sans avoir à augmenter l'épaisseur des segments de matériau formant les antennes, cette épaisseur étant généralement limitée selon les techniques de réalisation mises en oeuvre. Ainsi, il est possible d'améliorer l'adaptation des antennes à l'absorption des ondes.

Quel que soit le mode de réalisation, chacune des portions de matériau du support 106 peut être réalisée sous la forme d'un empilement de deux matériaux, l'un servant au maintien mécanique, et l'autre servant de matériau résistif. Dans ce cas, les antennes sont disposées du côté du matériau résistif afin d'avoir un contact thermique entre le matériau des antennes et le matériau résistif du support.

En outre, la présence ou non d'une cavité résonante sous le support 106 telle que précédemment décrite pour le premier mode de réalisation peut s'appliquer également pour les autres modes de réalisation.

Quel que soit le mode de réalisation, le détecteur 100 peut fonctionner à température ambiante, ou être refroidi pour fonctionner à très basse température (100 mK, ou moins de 10 mK). En outre, le détecteur peut être encapsulé sous vide.

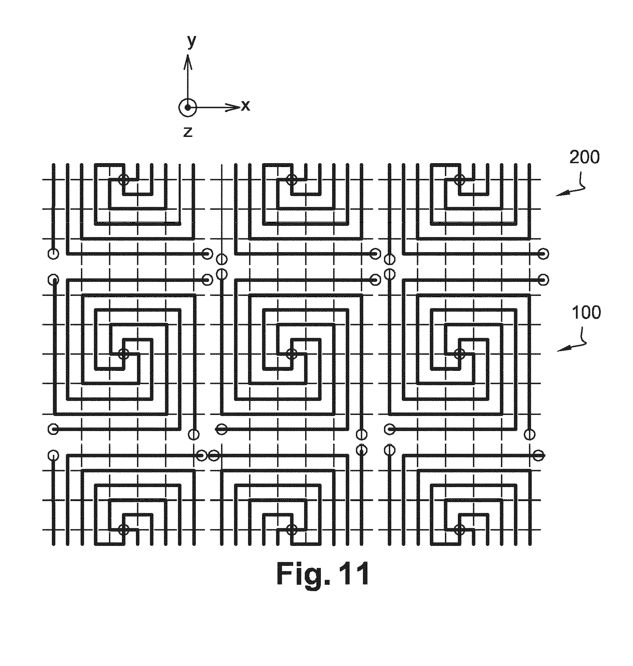

Dans tous les modes de réalisation précédemment décrits, le détecteur 100 peut correspondre à un élément individuel de mesure, ou correspondre à un des pixels d'une matrice formée par la juxtaposition de plusieurs détecteurs 100 les uns à côté des autres, faisant partie d'un dispositif de détection 200 tel que représenté sur la figure 11. Les circuits de lecture des détecteurs 100 de cette matrice peuvent être situés dans un même substrat en-dessous des antennes de détection et des supports des antennes, et éventuellement en-dessous des matériaux réflecteurs si ces détecteurs comportent des cavités optiques résonantes.

Dans les différents modes de réalisation précédemment décrits, les bras de la spirale sont formés par des portions de matériau disposées parallèlement et perpendiculairement les unes aux autres. Toutefois, les portions de matériau formant les bras de la spirale peuvent former entre elles des angles différents (par exemple sur un même bras, les portions formant ce bras peuvent former des angles inférieurs à 90°, par exemple de 45°, les uns par rapport aux autres), ou bien être de forme incurvée. Il est par exemple possible que chaque bras de la spirale soit formé par une portion continue incurvée, ou plusieurs portions incurvées. La spirale formée par le support peut correspondre à tout type de spirale plane à au moins quatre bras.

Enfin, des les différents modes de réalisation précédemment décrits, la spirale comporte 4 bras. En variante de chacun de ces modes de réalisation, la spirale formée peut comporter plus de 4 bras. En outre, il est tout à fait possible que chaque réseau d'antennes soit réparti sur plus de deux bras de la spirale.

## Revendications

1. Détecteur de rayonnement photonique (100), comportant au moins:
- un support (106) formant une spirale plane à au moins quatre bras (112.1 - 112.12; 114.1 - 114.12; 116.1 - 116.12; 118.1 - 118.12), chaque bras étant suspendu entre une première extrémité (110) commune aux quatre bras et une deuxième extrémité (111.1- 111.4), chaque bras comportant au moins un matériau résistif dont sa résistivité varie en fonction de sa température et qui est relié électriquement aux première (110) et deuxième (111.1-111.4) extrémités dudit bras,
- un premier réseau d'antennes (102) sensibles à au moins un premier paramètre physique du rayonnement photonique et en contact thermiquement avec le matériau résistif de deux des quatre bras, appelés premiers bras (112.1 - 112.12 ; 114.1 - 114.12),
dans lequel la deuxième extrémité (111.1 - 111.4) de chaque bras est reliée électriquement à un circuit de lecture (120) du détecteur (100) et thermiquement à un premier puits thermique, et dans lequel la première extrémité (110) commune aux quatre bras est reliée thermiquement à un deuxième puits thermique.

2. Détecteur (100) selon la revendication 1, dans lequel la première extrémité (110) commune aux quatre bras de la spirale formée par le support (106) correspond au centre de la spirale.

3. Détecteur (100) selon l'une des revendications précédentes, dans lequel la première extrémité (110) commune aux quatre bras est reliée électriquement au circuit de lecture (120).

4. Détecteur (100) selon l'une des revendications précédentes, dans lequel la liaison thermique entre la première extrémité (110) commune aux quatre bras et le deuxième puits thermique et/ou, lorsque la première extrémité (110) commune aux quatre bras est reliée électriquement au circuit de lecture (120), la liaison électrique entre la première extrémité (110) commune aux quatre bras et le circuit de lecture (120), est formée par un premier plot (124) formant également un premier maintien mécanique entre le support (106) et le circuit de lecture (120).

5. Détecteur (100) selon l'une des revendications précédentes, dans lequel la deuxième extrémité (111.1-111.4) de chaque bras est reliée électriquement au circuit de lecture (120) et/ou thermiquement au premier puits thermique par un deuxième plot (126.1- 126.4) formant un deuxième maintien mécanique entre le support (106) et le circuit de lecture (120).

6. Détecteur (100) selon l'une des revendications précédentes, comportant en outre un deuxième réseau d'antennes (104) sensibles à au moins un deuxième paramètre physique du rayonnement photonique et en contact thermiquement avec le matériau résistif des deux autres des quatre bras, appelés deuxièmes bras (116.1-116.12 ; 118.1-118.12).

7. Détecteur (100) selon la revendication 6, dans lequel le premier et le deuxième paramètres physiques sont deux composantes du rayonnement photonique ou deux longueurs d'ondes différentes du rayonnement photonique.

8. Détecteur (100) selon la revendication 6, dans lequel le premier et le deuxième paramètres physiques sont deux composantes orthogonales l'une par rapport à l'autre d'une polarisation linéaire du rayonnement photonique, dans lequel les antennes (102) du premier réseau d'antennes sont des antennes dipôles formées par des premiers segments de matériau électriquement conducteur orientés parallèlement à une première direction, dans lequel les antennes (104) du deuxième réseau d'antennes sont des antennes dipôles formées par des deuxièmes segments de matériau électriquement conducteur orientés parallèlement à une deuxième direction, la première et la deuxième directions étant sensiblement perpendiculaires l'une par rapport à l'autre, et dans lequel une longueur de chacun des premiers segments et des deuxièmes segments est sensiblement égale à la moitié d'une longueur d'onde du rayonnement photonique destinée à être détectée respectivement par les antennes (102) du premier réseau d'antennes et par les antennes (104) du deuxième réseau d'antennes.

9. Détecteur (100) selon la revendication 8, dans lequel une longueur de chacun des premiers segments est sensiblement égale à une longueur de chacun des deuxièmes segments.

10. Détecteur (100) selon la revendication 6, dans lequel chacune des antennes (102, 104) du premier et du deuxième réseaux d'antennes comporte deux segments de dimensions sensiblement similaires et se croisant sensiblement perpendiculairement l'un par rapport à l'autre au niveau de leur centre en formant un motif de croix, et une longueur de chacun des segments des antennes (102, 104) est sensiblement égale à la moitié d'une longueur d'onde du rayonnement photonique destinée à être détectée.

11. Détecteur (100) selon la revendication 10, dans lequel la longueur de chacun des segments de chacune des antennes (102) du premier réseau d'antennes est sensiblement égale à la longueur de chacun des segments de chacune des antennes (104) du deuxième réseau d'antennes, ou dans lequel la longueur de chacun des segments de chacune des antennes (102) du premier réseau d'antennes est différente de la longueur de chacun des segments de chacune des antennes (104) du deuxième réseau d'antennes.

12. Détecteur (100) selon l'une des revendications 1 à 5, dans lequel le matériau résistif des deux autres des quatre bras, appelés deuxièmes bras (116.1-116.12 ; 118.1-118.12), est en contact thermique avec aucune antenne.

13. Détecteur (100) selon la revendication 12, dans lequel chacune des antennes (102) du premier réseau d'antennes comporte deux segments de dimensions sensiblement similaires et se croisant sensiblement perpendiculairement l'un par rapport à l'autre au niveau de leur centre en formant un motif de croix, et une longueur de chacun des segments des antennes (102) est sensiblement égale à la moitié d'une longueur d'onde du rayonnement photonique destinée à être détectée.

14. Détecteur (100) selon l'une des revendications précédentes, dans lequel les antennes (102) du premier réseau d'antennes sont disposées sur les premiers bras (112.1-112.12; 114.1-114.12), et/ou les antennes (104) du deuxième réseau d'antennes sont disposées sur les deuxièmes bras (116.1-116.12 ; 118.1-118.12).

15. Détecteur (100) selon l'une des revendications précédentes, dans lequel le support (106) comporte du silicium formant en outre le matériau résistif, et/ou dans lequel les antennes (102, 104) du premier et/ou du deuxième réseau d'antennes comportent au moins un matériau métallique ou supraconducteur ou semi-conducteur.

16. Détecteur (100) selon l'une des revendications précédentes, dans lequel la résistance de surface de chacune des antennes (102, 104) du premier et/ou du deuxième réseau d'antennes est comprise entre environ 20 Ω et 2000 Ω, et/ou dans lequel la résistance de surface du matériau résistif est supérieure à environ 10 kΩ/carré.

17. Détecteur (100) selon l'une des revendications précédentes, comportant en outre un réflecteur (123) disposé entre les antennes (102, 104) et le circuit de lecture (120) tel qu'une distance entre le réflecteur (123) et les antennes (102, 104) soit égale à environ un quart d'une longueur d'onde du rayonnement photonique destinée à être détectée.

18. Détecteur (100) selon l'une des revendications précédentes, comportant en outre une ou plusieurs portions de matériau diélectrique disposées entre les antennes et le matériau résistif du support.

19. Dispositif (200) de détection d'un rayonnement photonique, comportant une matrice de détecteurs (100) selon l'une des revendications précédentes.
